# EUROPEAN PATENT APPLICATION

(11) **EP 1 953 476 A1**
(43) Date of publication of application: **06.08.2008**
(21) Application number: 08002118.1
(22) Date of filing: 05.02.2008
(51) Int. Cl.: F24J 2/04

(54) **Building comprising a heat exchanger and a fall protection**

(30) Priority: 05.02.2007 NL 1033341
(71) Applicant: Oranjedak B.V., 3334 KC Zwijndrecht (NL)
(72) Inventor: Steenmetz, Renatus Antius, 4818 GE Breda (NL)
(74) Representative: Land, Addick Adrianus Gosling

(57) **Abstract**

Building comprising:
- a heat exchanger connected to a heat-regulating system for cooling respectively heating the interior of the building;
- a roof, balcony or terrace part arranged in the vicinity of, or at least not too great a distance from, the heat exchanger; and
- fall protection means arranged at least partially around the roof, balcony or terrace part, in which fall protection means at least one passage of the heat exchanger is arranged.

## Description

The present invention provides a building comprising a heat exchanger connected to a heat-regulating system for cooling respectively heating the interior of the building; a roof, balcony or terrace part; and fall protection means arranged at least partially around the roof, balcony or terrace part.

The invention further provides a fall protection.

The invention also provides a system, comprising: at least two uprights; and a passage to be arranged between the two uprights.

The invention further provides a method for producing such a fall protection.

Buildings which are cooled or heated using an air-conditioning system are usually provided on the outside with a device comprising a heat exchanger for the purpose of exchanging heat, to be discharged from the building or to be supplied to the building, with the ambient air outside the building. Such devices are often arranged on the roof, on a balcony, or on the outer wall. Such devices cannot usually be described as an attractive sight. In addition, and moreover more importantly: If the device is arranged on a balcony or on a roof which is accessible to people, this device then takes up space on this balcony or this roof, this space no longer being available to the people going onto the balcony or the roof. It is for instance possible here to envisage a shop premises wherein a terrace is provided on the roof where customers of the shop can take a seat in order to eat or drink something. Devices for use in air-conditioning systems spoil the appearance of such a terrace and moreover take up space which could have been available for the terrace.

An object of the present invention is to provide a building with a roof or balcony which is accessible to people and wherein a heat exchanger for a heat-regulating system takes up less space usable by persons on the roof or the balcony than prior art buildings.

In a first embodiment the present invention provides a building comprising: a heat exchanger which is connected to a heat-regulating system for cooling or heating the interior of the building; a roof, balcony or terrace part arranged in the vicinity of, or at least not too great a distance from, the heat exchanger; and fall protection means arranged at least partially around the roof, balcony or terrace part, in which fall protection means at least one passage of the heat exchanger is arranged. Roofs and balconies accessible to people must by law be provided with a reliable fall protection in order to prevent a person falling from the roof or the balcony. Since the arrangement of such a fall protection is mandatory on accessible roofs and balconies, the present invention provides more space which can be accessed and used by people on these roofs and balconies than prior art heat exchangers placed on a balcony or roof. By at least partially realizing the fall protection using passages or conduits of a heat exchanger, the space normally taken up by the heat exchanger is saved, since the heat exchanger is arranged in the space taken up by the (mandatory) fall protection. Extra space can thus be used for instance for a terrace.

In this embodiment the conduits fulfil a dual function by on one hand realizing heat exchange between the fluid in the conduit and the outside air and on the other by forming a physical barrier which prevents people falling downward from the roof or the balcony. In a particular embodiment the passages of the heat exchanger in the fall protection are embodied as tubes extending between uprights of the fall protection. In an alternative embodiment the passages are embodied as channels extending in a plate between uprights of the fall protection. In another alternative embodiment, the passages are formed by channels extending in a slat between uprights of the fall protection.

In another embodiment of the invention a fall protection is provided comprising at least one passage suitable for guiding a fluid. Heat exchange with the ambient air is realized by connecting the passage or conduit to the cooling system or the heating system of the building and guiding a medium used for heat transport through the conduit. An additional advantage of such an embodiment is that the efficiency of the heat exchanger is increased because the surface area available for the heat exchange is quite extensive compared to prior art heat exchangers for buildings. This is because these latter are built into a device with a limited space, wherein the heat exchanger is arranged in a relatively small and relatively closed-off space. The qualification "relatively closed-off" is relative in respect of the present invention. According to the invention the heat exchanger extends in a very advantageous embodiment all the way along the whole periphery of the roof or balcony edge. In another embodiment the heat exchanger extends along only a part of the roof or balcony edge. In yet another embodiment the heat exchanger extends at least partially over a part of the roof or balcony not immediately adjacent to the edge of the roof or balcony.

It is of course necessary in such an embodiment according to the invention to take into account the temperature the outer surface of the conduits can reach. For the most favourable possible heat exchange the difference in temperature with the outside air must be as great as possible. On the other hand, the temperature of the outer surface of the conduits must be such that people cannot injure or hurt themselves due to too high or too low temperatures.

In a particular embodiment the invention provides a fall protection, wherein the passage is enclosed by a slat which is rotatable about its longitudinal axis. Such an embodiment is for instance advantageous if heat from the outside air must be transferred to the fluid running through the passage for the purpose of heating the building. By having the passages enclosed by a slat incident radiation, such as for instance sunlight, is converted into thermal energy, whereby the slat and thereby the fluid in the passage are additionally heated. By giving the slat a rotatable form it is possible to rotate the slat to an optimal angle relative to the incident radiation for a maximum heating of the fluid. In a specific embodiment the passage in the slat is formed by a channel extending through the slat. In an alternative embodiment the passage is formed by a conduit extending through the slat.

In a further embodiment a fall protection is provided further comprising a control device for controlling the angle at which the slat is rotated. In this way the control device controls the optimal angle for the slats, thereby maximizing the heat exchange.

In yet another embodiment the invention provides a fall protection, wherein the control device controls the angle of the slat on the basis of the position of the sun. In an advantageous embodiment account is herein taken of the fact of whether the building has to be heated or, conversely, cooled. If the building has to be heated, the control device then controls the angle of the slats such that the incident radiation of for instance the sunlight falls perpendicularly onto the wide side of the slats. This results in a maximum quantity of incident radiation, which results in a maximum heating of the slats, and thus a maximum heating of the fluid.

If on the other hand the building has to be cooled, the control device rotates the slats with the narrow side in the direction of the incident radiation in order to thus minimize heating of the slats by incident radiation.

In a further embodiment the control device controls the angle of the slats on the basis of the wind speed and wind direction.

In another embodiment the invention provides a fall protection, wherein the internal spaces of at least two passages are mutually connected. Different passages lying mutually in line are connected to each other so as to form as it were a single, longer passage and to obtain an extra-long heat exchanger. In an alternative embodiment passages situated above or adjacently of each other are mutually connected. A longer heat exchanger is also obtained in this manner without the fall protection itself having to be lengthened.

In a further embodiment a fall protection is provided which further comprises an upright, and wherein the connection between at least two passages is situated in the upright. In this way the connections can be concealed so that they are not accessible to the people present on the roof. This is particularly advantageous if the connections are releasable, for instance in the case the fall protection takes a modular form.

The present invention further provides a system comprising: at least two uprights; and a passage to be arranged between the two uprights, which passage is suitable for guiding a fluid. The system preferably takes a modular form so that, depending on the length of the part to be protected, a plurality of uprights are arranged between which the passages are arranged.

In a further embodiment there is provided a system further comprising a coupling conduit suitable for mutually connecting at least two passages arranged between uprights.

Yet another embodiment provides a system wherein the coupling conduit connects two passages, which both extend between two shared uprights. In this way the fluid is guided back and forth between two uprights so that a heat exchanger is formed with a length which is longer than the length of the fall protection.

In an alternative embodiment the invention provides a system wherein the coupling conduit connects two passages, each of which extends between two uprights and wherein the passages have no more than one upright in common. In this manner the whole length of the fall protection is utilized for a single heat exchanger, even when the fall protection comprises a plurality of uprights.

The present invention further provides a method for producing a fall protection which comprises a heat exchanger, comprising the steps of: mounting a first end of a passage of a heat exchanger on a first upright; mounting a second end of the passage of the heat exchanger on a second upright; connecting a heat-regulating system to a first end of a passage of the heat exchanger; connecting the heat-regulating system to a second end of a passage of the heat exchanger; such that a continuous passage is formed suitable for allowing a fluid to flow out of the heat-regulating system via the first end, at least one passage of the heat exchanger and the second end, and back again into the heat-regulating system.

Further advantages and embodiments of the present invention will become apparent on the basis of the following description and figures, wherein:
- figure 1 shows a building according to an embodiment of the present invention; and
- figure 2 shows a fall protection according to an embodiment of the present invention.

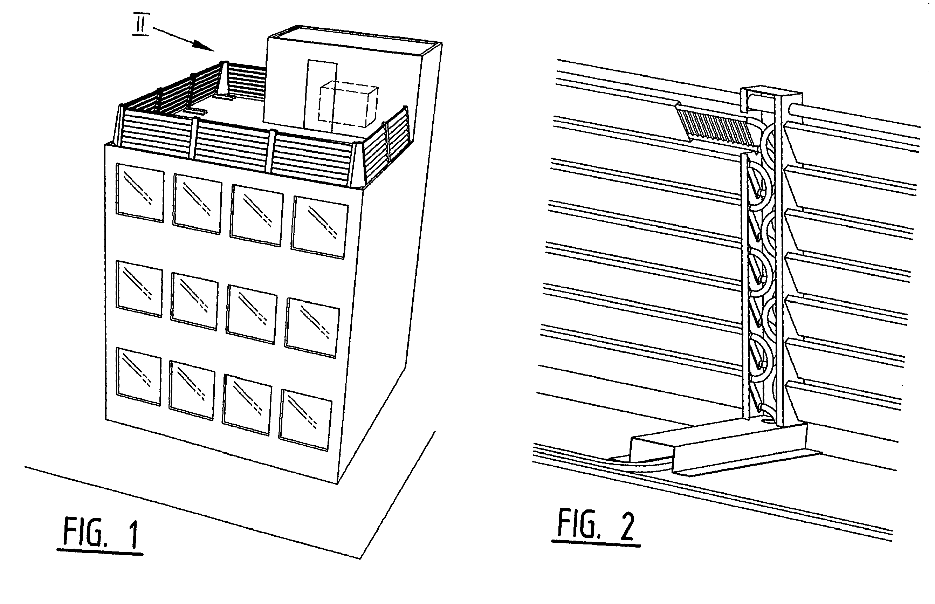

Figure 1 shows a building 10 with a roof 12. Roof 12 is accessible to people via a door 14 in a superstructure on building 10. The air-conditioning system comprises, among other parts, an air-conditioning unit 16 comprising a compressor and an expansion device. A prior art air-conditioning unit also comprises at least one heat exchanger for exchanging thermal energy between the cooling fluid or the cooling gas and the outside air. In an embodiment of the present invention the heat exchanger for exchanging thermal energy with the outside air is not provided in the air-conditioning unit 16 but in the balustrade 20 which is placed on the edge of roof 10 to prevent the possibility of people present on this roof 12 falling from the building 10. In this embodiment the air-conditioning unit 16 takes a very compact form because it does not include a heat exchanger.

Balustrade 20 comprises uprights 22 connected to roof 12 by means of a foot 24 (figure 2). Uprights 22 are mutually connected on the top side by means of a railing 28. Railing 28 must prevent people present on roof 12 falling from this roof 12, and thereby from building 10. Bars (not shown) or slats 26 are placed between uprights 22 under railing 28 in order to prevent the possibility of people or objects falling through the railing 28 and from roof 12. Slats 26 comprise two tubes 34 through which cooling fluid can flow. Cooling fluid is guided via a feed conduit 32 through the foot 24 of an upright 22 to a first tube 34 in a first slat 26. At the distal end (not shown) of first tube 34 the cooling fluid is guided by means of a coupling hose 36 to a second tube 34, which in this embodiment is located in the same first slat 26 but which in another embodiment is located in a second slat 26. In this way the cooling fluid is guided through a plurality of tubes 34 in slats 26, wherein the cooling fluid relinquishes thermal energy to slats 26, which in turn relinquish the thermal energy to the outside air. The cooling fluid is finally guided back from a final tube 34 to the air-conditioning system via a return conduit.

In accordance with the anticipated required cooling capacity, required temperature drop of the cooling fluid in the heat exchanger, the flow rate of the cooling fluid and the maximum temperature difference between the cooling fluid and the outside air, a suitable number of tubes 34 is connected in series or in parallel by means of coupling hoses 36 during installation of the heat exchanger. The cooling fluid can thus be guided up and downward a number of times through different tubes between a first and a second upright 22. For this purpose different tubes 34 are mutually connected between the two same uprights 22 by means of coupling hoses 36.

In another embodiment the coupling hoses 36 connect tubes 34 which are arranged between different uprights 22.

It will be apparent that the skilled person will recognise many possible combinations of connection between tubes 34 and will apply these according to the circumstances.

The present invention is not limited to the above described preferred embodiments thereof; the rights sought are defined by the scope of the following claims, within which many modifications are possible.

## Claims

1. Building, comprising:
- a heat exchanger connected to a heat-regulating system for cooling respectively heating the interior of the building;
- a roof, balcony or terrace part arranged in the vicinity of, or at least not too great a distance from, the heat exchanger; and
- fall protection means arranged at least partially around the roof, balcony or terrace part, in which fall protection means at least one passage of the heat exchanger is arranged.

2. Fall protection, comprising at least one passage suitable for guiding a fluid.

3. Fall protection as claimed in claim 2, wherein the passage is enclosed by a slat which is rotatable about its longitudinal axis.

4. Fall protection as claimed in claim 3, further comprising a control device for controlling the angle at which the slat is rotated.

5. Fall protection as claimed in claim 4, wherein the control device controls the angle of the slat on the basis of the position of the sun.

6. Fall protection as claimed in any of the claims 2-5, wherein the internal spaces of at least two passages are mutually connected.

7. Fall protection as claimed in claim 6, further comprising an upright, and
wherein the connection between at least two passages is situated in the upright.

8. Building as claimed in claim 1, wherein the fall protection means comprise a fall protection according to any of the claims 2-7.

9. System, comprising:
- at least two uprights; and
- a passage to be arranged between the two uprights, which passage is suitable for guiding a fluid.

10. System as claimed in claim 9, further comprising a coupling conduit suitable for mutually connecting at least two passages arranged between uprights.

11. System as claimed in claim 10, wherein the coupling conduit connects two passages, which both extend between two shared uprights.

12. System as claimed in claim 10, wherein the coupling conduit connects two passages, each of which extends between two uprights, and wherein the passages have no more than one upright in common.

13. Method for producing a fall protection which comprises a heat exchanger, comprising the steps of:
- mounting a first end of a passage of a heat exchanger on a first upright;
- mounting a second end of the passage of the heat exchanger on a second upright;
- connecting a heat-regulating system to a first end of a passage of the heat exchanger;
- connecting the heat-regulating system to a second end of a passage of the heat exchanger;
such that a continuous passage is formed suitable for allowing a fluid to flow out of the heat-regulating system via the first end, at least one passage of the heat exchanger and the second end, and back again into the heat-regulating system.
